# EUROPÄISCHE PATENTSCHRIFT

(11) **EP 0 963 694 B1**
(45) Veröffentlichungstag und Bekanntmachung des Hinweises auf die Patenterteilung: **04.12.2002**
(21) Anmeldenummer: 99109921.9
(22) Anmeldetag: 20.05.1999
(51) Int. Cl.: A01M 19/00, A01M 17/00

(54) **Thermische Schädlingsbekämpfung**
Thermal device for pest control
Dispositif thermique de lutte contre la vermine

(30) Priorität: 10.06.1998 DE 19825880
(43) Veröffentlichungstag der Anmeldung: 15.12.1999
(73) Patentinhaber: Binker Materialschutz GmbH, 90567 Schwaig (DE)
(72) Erfinder: Binker, Gerhard Dr., 90607 Rückersdorf (DE); Binker, Joachim, 90518 Rasch (DE)
(74) Vertreter: Gaiser, Hartmut, Dipl.-Ing.

(56) Entgegenhaltungen:
- EP-A- 0 676 138
- WO-A-92/00173
- DE-A- 19 621 516
- DE-U- 29 803 452
- FR-A- 438 222

## Beschreibung

Die Erfindung betrifft ein Verfahren zur Bekämpfung von Schädlingen überwiegend im Vorratsschutz oder in lebensmittelverarbeitenden Betrieben mittels Hitze.

In Dänemark werden schon seit sehr langer Zeit Öl- oder Gas-beheizte Brenner zur Hausbockbekämpfung in Dächern eingesetzt. Öl oder Gas werden verbrannt und die dabei frei werdende Wärme erhitzt Luft, die mit den Verbrennungsgasen in den befallenen Dachstuhl eingeleitet wird. Nach entsprechend langer Einwirkzeit sind die Schädlinge im Gebälk tot. Ähnliche Verfahren werden zur Bekämpfung von Termiten und Schaben in den USA eingesetzt. Hierbei werden gleichzeitig die Gebäude in Folie oder Zeltplanen eingepackt, um den Wärmeverlust so gering wie möglich zu halten. Das Einpacken der Gebäude in Zeltfolien ist bei großen Objekten, wie Mühlen oder großen lebensmittelverarbeitenden Betrieben nicht möglich bzw. zu kostenaufwendig.

In der WO 92/00173 ist ein Verfahren aus Holland beschrieben, bei dem die erwärmte Luft im Behandlungsraum zusätzlich auf einen Mindestfeuchtegehalt gehalten wird. Nachteiligerweise werden die Verbrennungsabgase in den Behandlungsraum eingeleitet; dieses Verfahren läßt sich in lebensmittelverarbeitenden Betrieben nicht einsetzen.

In der EP 0 416 255 A1 ist ein Verfahren beschrieben, bei dem eine Mühle, die von Schädlingen befallen ist, so von Schädlingen befreit wird, daß vor Einleiten von Kohlendioxid die Innenwände auf eine Mindesttemperatur von ca. 27 °C erwärmt werden. Zur Erwärmung werden Erhitzungsgeräte im Behandlungsraum selbst aufgestellt und das Kohlendioxid ebenfalls erwärmt.

In dem Artikel von H. Hofmeier "Schädlingsbekämpfung durch Wärme in der Mühle, in Bäkkereien und Gaststätten", Die Mühle + Mischfuttertechnik, 133. Jahrgang, Heft 51/52, 19. Dezember 1996, Seite 842 ff. ist ein Entwesungsverfahren mit Wärme beschrieben, bei dem zur Erwärmung im Behandlungsraum aufgestellte explosionsgeschützte Elektroöfen verwendet werden. Durch den relativ schlechten Wirkungsgrad der elektrischen Beheizung ist der Energieaufwand sehr hoch und oft lassen sich Mühlen mit großem Raumvolumen nur zur Schädlingsbekämpfung beheizen, wenn zusätzlich ein Blockheizkraftwerk zur Verfügung steht.

Elektroöfen zur Schädlingsbekämpfung in Mühlen etc. sind auch im Gebrauchsmuster DE 29618646 U1 beschrieben.

Der Artikel von J.A. Teich, Thermische Schädlingsbekämpfung in Mühlenbetrieben, Die Mühle + Mischfuttertechnik, 133. Jahrgang, Heft 11, 14. März 1996, Seite 172 ff. beschreibt ein Verfahren, bei dem Heißdampf zur Desinsektion in Mühlen verwendet wird. Der heiße Dampf kann sich jedoch an kühleren Teilen niederschlagen und so kann es zu Feuchteschäden in der Mühle kommen. Außerdem wachsen nach der Hitzebehandlung aufgrund des nach der Behandlung vorliegenden erhöhten Feuchtigkeitsgehalts in der Mühle vermehrt Schimmelpilze.

In der DE-19621516-A wird die Verwendung von Sulfurylfluorid zur Shädlingsbekämpfung beschrieben.

Aus den USA sind Kombinationen von Hitze mit Kohlendioxid, Phosphorwasserstoff und Dichlorphos bekannt geworden. In der US 5,403,597 ist ein kombiniertes Verfahren von Hitze aus Dampf, Erdgas und Elektrizität, Kohlendioxid und Phosphorwasserstoff beschrieben. Überwiegend werden elektrische Öfen (Electric Heaters) betrieben. Die Elektroöfen verschlingen sehr viel Energie und deshalb weicht man teilweise auf Gas-beheizte Öfen aus. Diese werden bis kurz vor dem Einleiten von Kohlendioxid und Phosphorwasserstoff betrieben, und dann abgestellt, da sich Phosphorwasserstoff im Gas-beheizten Brenner zersetzen würde. Noch star kere Korrossionserscheinungen als durch Phosphorwasserstoff selbst erzeugt, wären die Folge. Außerdem hat dieses Verfahren den Nachteil, daß nach Abstellen der gasbeheizten Brenner der zu behandelnde Raum während der Gaseinwirkzeit mehr oder weniger rasch auskühlt ( Fumigation and Pheromones Workshop, West Lafayette, Indiana, USA, 1996, mit praktischer Vorführung des Verfahrens durch D. und J. Mueller). Dadurch entstehen Wirksamkeitseinbusen während des Verfahrens, denn die Schädlinge atmen den Phosphorwasserstoff wesentlich schneller bei höheren Temperaturen ein.

Auch beim Einsatz von Kohlendioxid als Begasungsmittel mit gleichzeitiger Erwärmung der Atmosphäre im Behandlungsraum mittels Öl- oder Gas-beheizter Brenner treten Probleme auf: Durch den Verbrennungsvorgang entstehen Abgase, die Lebensmittelrückstände oder Lebensmittel selbst im Behandlungsraum kontaminieren können. Vor allem Heizöl enthält Schwefelverbindungen, die sich als Sulfat und Sulfit in Lebensmittelrückständen in der Mühle wiederfinden lassen. Auch entsteht im Behandlungsraum durch den Verbrennungsvorgang ein Überdruck, da zusätzliche Gase in den Behandlungsraum eingeleitet werden, so daß die zur Begasung notwendige Abdichtung beschädigt werden kann und es dann zu höheren Gas- oder auch Wärmeverlusten kommen kann.

Aufgabe der Erfindung war es deshalb, ein Verfahren vorzuschlagen, bei dem sich in Mühlen oder sonstigen lebensmittelverarbeitenden Betrieben oder Lebensmittellägern Schädlingsbekämpfungen mittels Hitze wirtschaftlich und effektiv durchführen lassen und diese Verfahren ggfs. auch kombiniert mit Begasungsverfahren angewandt werden können, ohne daß es z. B. zu erhöhten Gasverlusten oder Temperaturerniedrigungen während der Behandlungsdauer kommt. Die Aufgabe der Erfindung konnte durch den kennzeichnenden Teil des Anspruchs 1 gelöst werden.

Beim erfindungsgemäßen Verfahren werden ebenfalls wie beim Stand der Technik z.B. Öloder Gas-beheizte Brenner oder mit sonstigen Brennstoffen beheizte Brennkammern betrieben, wobei die Raumluft des zu behandelnden Raums über Wärmetauscherflächen erwärmt wird. Beim erfindungsgemäßen Verfahren ist die Behandlungsraumatmosphäre gasdicht vom Brennerraum des Heizgeräts abgetrennt und dieses befindet sich bevorzugt außerhalb des zu behandenden Raumes. Dies hat den Vorteil, daß die Raumluft des zu behandelnden Raums nicht mit Abgasen kontaminiert wird, da diese aus der Brennkammer z. B. in die Umgebung abgeleitet werden.

Da die aufzuheizende Behandlungsraumluft nicht mit offenen Flammen oder glühenden Teilen oder Teilchen in Berührung kommt, eignet sich das Verfahren auch zum Erwärmen von Mühlen, ohne daß es zu Mehlstaubexplosionen kommt.

In bevorzugter Ausgestaltung der Erfindung wird ein Teil der aufzuheizenden Behandlungsraumatmosphäre kontinuierlich oder diskontinuierlich oder regelbar durch die Wärmetauscherkammer des Heizgerätes geführt, dabei erwärmt und in den Behandlungsraum zurückgeleitet. Dadurch entsteht eine Umwälzung und somit im Behandlungsraum eine Gleichverteilung der Wärme. Die Verteilung der Wärme im Behandlungsraum kann über Rohrverteilungen im Behandlungsraum zusätzlich erfolgen, so daß auch in Bereichen mit z. T. niedrigen Temperaturen dort zur Abtötung der Insekten gewünscht hohe Temperaturen erreicht werden können.

Bei gasdichter Abtrennung der Wärmetauscherkammer von der Brennkammer und gasdichter Rohrführung wird in den Wärmekreislauf zusätzlich Sulfurylfluorid als Begasungsmittel eingeleitet. Die in den Behandlungsraum zusätzlich eingeleiteten Begasungsmittel, die dann durch die Umwälzung mittels des oder der Heizgeräte im Behandlungsraum gleich verteilt werden, sorgen für eine noch raschere Abtötung der Schädlinge. Durch die Temperaturerhöhung wirken die Begasungsmittel besonders gut, da die Insekten in Abhängigkeit der Umgebungstemperatur mehr oder weniger schnell atmen und somit die Begasungsmittel rasch inkorporieren und schneller abgetötet werden. Die Begasungsmittel werden bevorzugt nach dem Aufheizen des Behandlungsraums in diesen oder nach dem Zusatz von Kohlendioxid in den Behandlungsraum eingeleitet, da dann in der Regel konstante Druckverhältnisse im Behandlungsraum vorherrschen.

Der Öl- oder Gasverbrauch ist beim erfindungsgemäßen Verfahren auch bei großen aufzuheizenden Raumvolumina noch relativ gering, auch wenn die Raumtemperatur auf 60 °C und mehr erhöht wird. Bei der erfindungsgemäßen Erwärmung mit separater Rauchgasführung sind die Wirkungsgrade wesentlich besser als bei der Erwärmung mit Elektroöfen. Außerdem hat die Erwärmung mit separater Rauchgasführung den Vorteil, daß bei zusätzlicher Einleitung eines Begasungsmittels in den aufzuheizenden Raum während des Aufheizvorgangs oder Temperatur-Haltevorgangs im Behandlungsraum kein zusätzlicher nennenswerter Überdruck vorherrscht, da lediglich die Atmophäre im Behandlungsraum umgewälzt wird und die relativ geringen Mengen des einzuleitenden Begasungsmittels praktisch keinen Überdruck im Behandlungsraum erzeugen. Es ist jedoch eine Druckerhöhung durch die Erwärmung oder Volumenstromerhöhung durch das Heizen zu verzeichnen, da sich warme Luft ausdehnt. Dadurch, daß im Behandlungsraum (= aufzuheizender Raum) kein zusätzlicher Überdruck herrscht, entweicht weniger Wärme und Begasungsmittel aus dem Behandlungsraum. Während der Erwärmungsphase kann im Behandlungsraum ein vorher eingebrachter und mit Luft gefüllter Hohlkörper in die Umgebung entleert werden, wodurch im Behandlungsraum der durch Wärme-Ausdehnung entstehende Überdruck abgebaut wird. Dies heißt folglich weniger Begasungsmittel- und Wärmeverlust in die Umgebung und keine Beschädigung der Abdichtung.

In bevorzugter Ausgestaltung der Erfindung erfolgt die Ansaugung der Behandlungsraumluft an den kühleren Stellen des Behandlungsraums, z. B. Mühle, also insbesondere im Keller oder EG-Bereich, und der Eintritt der erwärmten Luft in den Behandlungsraum erfolgt bevorzugt an kühleren Stellen oder in kältere Bereiche bzw. kältere Geschosse des Behandlungsraums oder Gebäudes, z. B. Mühle. Dadurch wird eine wesentlich effektivere und schnellere Erwärmung und auch gleichmäßigere Aufheizung erzielt.

Durch Anbringen wenigstens eines Temperaturfühlers im Behandlungsraum läßt sich auch eine gewünschte Behandlungsraumtemperatur ansteuern und diese auf z.B. einen konstanten Wert halten oder sonstwie regeln. Auch ist es möglich, den Behandlungsraum bzw. dessen Atmosphäre geregelt zu befeuchten. In bevorzugter Ausgestaltung der Erfindung wird über einen Vernebler oder eine Düse Wasser in die Rückführleitung für die erhitzte Luft vom Heizgerät zum Behandlungsraum eingedüst. Über wenigstens einen Feuchtefühler, der im Behandlungsraum eingebracht ist, kann die relative Luftfeuchte erfaßt und nach einem Sollwert oder Kennlinien oder Feuchteprofil, wie z.B. nach den Keylwerth'schen Diagrammen bei Anwesenheit von Holz, z.B. zur Desinsektion in Kirchen und Museen, über eine Steuereinheit im Behandlungsraum geregelt werden.

Für explosionsgefährdete Bereiche, wie in Mehlmühlen, können alle Heizgeräteteile, insbesondere der Wärmetauscherteil des Heizgerätes, in ex-geschützter Ausführung konstruiert sein. Mit Hilfe des erfindungsgemäßen Verfahrens lassen sich auch große Mühlenräume, insbesondere bei Verwendung mehrerer Heizaggregate, relativ rasch auf Letaltemperaturen für Insekten von mind. 42 °C erwärmen. Bevorzugt werden Raum- oder Materialtemperaturen von ca. 50 bis 65 °C im Behandlungsraum angestrebt.

Beim Zusatz von Begasungsmittel werden Temperaturen von nur ca. 22 °C bis ca. 40 °C im Behandlungsraum angestrebt. Als Begasungsmittel wird Sulfurylfluorid eingeleitet.

Die Gaskonzentrationen der zugesetzten Begasungsmittel liegen bevorzugt zwischen 10 ppm und ca. 150 g/m³ und ca. 30 Vol.-% bis ca. 99,99 Vol.-%, wobei bei den Inertgasen die höheren Konzentrationen bevorzugt sind und bei den toxischen Gasen die geringeren Konzentrationen.

Im Heizgerät ist bevorzugt eine Ventilatoreinheit eingebaut, die bevorzugt eine hohe Pressung besitzt. Damit können Strömungswiderstände, insbesondere verursacht durch Knicke, Bögen etc. in den Schläuchen, Rohren oder Leitungen zur Luft- oder Warmgasführung (Kreislaufbetrieb vom Behandlungsraum über das Heizgerät in den Behandlungsraum zurück), überwunden werden. Auch lange Zufuhrleitungen und Verteilerschläuche können dann eingesetzt werden. Die Verteilerschläuche befinden sich bei Bedarf dann im zu behandelnden Gebäude/Raum.

Die zu behandelnden Raumvolumina liegen durchschnittlich zwischen 1000 m³ und 100000 m³. Die Aufheizzeiten bewegen sich durchschnittlich zwischen einigen Stunden und bevorzugt ca. 12 bis 18 Stunden. Die Einwirkzeiten der Hitze im Behandlungsraum belaufen sich durchschnittlich auf mind. 1 Stunde bis ca. 3 bis 10 Stunden, je nach z.B. Schädlingsbefall auch bis zu ca. 40 Stunden.

Bei Zusatz von Begasungsmitteln liegen die Einwirkzeiten der Kombination "Begasungsmittell/Hitze" bei toxischen Gasen zwischen ca. 6 bis 48 Stunden und bei Zusatz von Inertgasen bei ca. 6 bis 136 Stunden. Bei Zusatz von Inertgasen im Gemisch mit toxischen Gasen können die Einwirkzeiten auf ca. 3 Stunden bis ca. 24 Stunden gesenkt werden.

Die Wärmetauscher-Temperatur, insbesondere die Wärmetauscher-Oberflächentemperatur, darf nicht gleich oder höher sein als die Zersetzungstemperatur des beigesetzten Begasungsmittels, da sich ansonsten das Begasungsmittel thermisch an der Oberfläche des Wärmetauschers zesetzen würde. Bei Sulfurylfluorid als zugesetztes Begasungsmittel beispielsweise sollte die Wärmetauscher-Oberflächentemperatur nicht höher als 400 bis 450 °C sein. Die Wärmetauscher-Oberflächentemperatur läßt sich durch z.B. die Größe der Brennkammer des Heizgeräts beeinflußen, durch Verwendung eines gas-beheizten Heizgeräts ( Heizöl-beheizte Heizgeräte erzeugen höhere Verbrennungstemperaturen ) oder durch die Leistungsstufen des Heizgeräts. Bevorzugt werden Heizgeräte mit Umluft- und Frischluft-Betrieb eingesetzt.

Das Bekämpfungsverfahren wird auch wirtschaftlicher, wenn das Abgas des Heizgerätes von unverbrannten organischen Gasen befreit wird und in den Behandlungsraum (1) zusätzlich eingeleitet wird. Das von unverbrannten organischen Gasen befreite, in den Behandlungsraum (1) eingeleitete Abgas ist Sauerstoff-arm und Kohlendioxid-reich und dadurch sterben die Schädlinge schneller ab. Weiterhin enthält es Wasserdampf, welcher die Luftfeuchte im Behandlungsraum (1) vorteilhafter erhöht. Die Entfernung von unverbrannten organischen Gasen kann insbesondere durch thermische Nachverbrennung, Katalyse oder Filterung erfolgen.

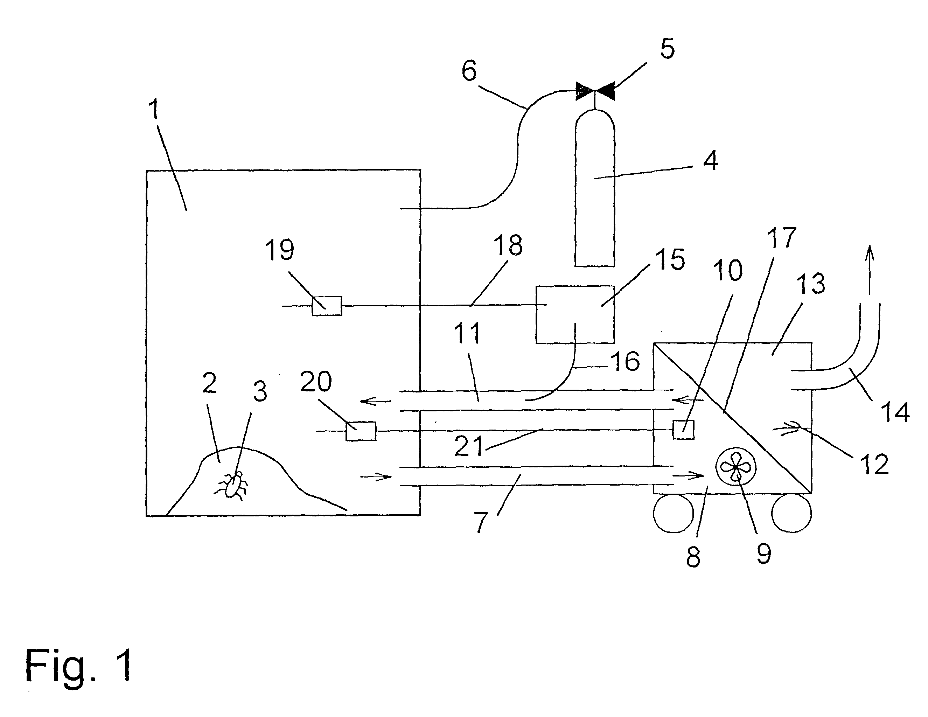

Weitere Vorteile und Einzelheiten der Erfindung ergeben sich aus den nachfolgenden Beispielen, aus Figur 1 und den Unteransprüchen.

**Ausführungsbeispiel** (siehe auch Figur 1): In einer Mühle (1) befinden sich Spalten und Risse sowie sonstige Verstecke für Insekten, aber auch Lebensmittelrückstände (2), in denen sich schädliche Insekten (3) befinden. Das Gebäude (1) wird gegen Wärme- und Gasverlust hinreichend gasdicht versiegelt und dann über ein Öl-beheiztes Heizaggregat mit der Wärmetauscherkammer (8) und der Brennkammer (13) beheizt. Hierbei wird über die Absaugleitung (7), die vom Behandlungsraum (1) zur Wärmetauscherkammer (8) führt, die Behandlungsraumluft angesaugt und mittels des Ventilators (9) über die Rückführleitung (11) in den Behandlungsraum (1) zurückgeleitet. Dadurch wird der Luftinhalt des Raums (1) erwärmt. Über den Brenner (12) wird der Brennstoff, wie z.B. Heizöl, in der Brennkammer (13) verbrannt und die dabei resultierenden Abgase werden als Abluftstrom über den Abluftstutzen (14) ins Freie geleitet. Die Trennung (17) zwischen Brennkammer (13) und Wärmetauscherkammer (8) ist gasdicht ausgebildet (schematisch in Fig. 1 gezeichnet). Dadurch ist vermieden, daß einerseits Verbrennungsgase in die Wärmetauscherkammer (8) gelangen bzw. in den Kreislaufstrom der Rohre (7) und (11) bzw. in den Behandlungsraum (1) und andererseits gelangt keine im Kreislauf geführte Atmosphäre in den Brennerraum (13).

Über den im Behandlungsraum (1) angebrachten Temperaturfühler (20) wird die Ist-Temperatur gemessen und über die Meßleitung (21) zur Steuereinheit (10) übermittelt, die dann die gewünschte Kreislauftemperatur einstellt.

Über den Feuchtefühler (19) wird im Behandlungsraum (1) die relative Luftfeuchte gemessen und über die Meßleitung (18) zum Befeuchtungsgerät (15) übermittelt, welches dann über die Dosierleitung (16) Wasser in die Rückführleitung (11) einspritzt oder vernebelt.

Sobald die Sollwert-Temperatur bzw. der Sollwert der relativen Luftfeuchte im Behandlungsraum (1) erreicht sind, wird die Zudosierung von Wasser bzw. das Heizen beendet oder so geregelt, daß jeweils ein konstanter Wert im Behandlungsraum (1) eingestellt wird.

Zusätzlich wird zur Wirksamkeitsbeschleunigung ein Begasungsmittel aus der Vorratsflasche (4) nach Öffnen des Ventils (5) über die Zufuhrleitung (6) in den Behandlungsraum (1) eingeleitet. Das Einleiten des Begasungsmittels oder die Nachdosierung können ebenfalls über einen Regelkreis erfolgen.

Durch die gasdichte Ausbildung der Trennung (17) zwischen Brennkammer (13) und Wärmetauscherkammer (8) gelangt z. B. kein toxisches Begasungsmittel, welches aus der Vorratsflasche (4) in den Behandlungsraum (1) eindosiert wurde, in die Brennkammer (13). Es geht durch die Trennung (17) auch kein Begasungsmittel an die Umwelt über das Heizgerät verloren. Außerdemgelangt durch die Trennung (17) das Begasungsmittel nicht in den Brenner (12) oder in die Brennkammer (13). Ein thermisches Zersetzen des Begasungsmittels ist dadurch ausgeschlossen. Auch ist Korrossion durch überwiegend saure Verbrennungsgase oder Folgeprodukte durch thermische Zersetzung vermieden. Nach Ablauf einer ausreichenden Einwirkzeit wird das Heizgerät abgestellt und der Behandlungsraum (1) kann gelüftet werden. Der Produktionsablauf kann fortgesetzt werden bzw. der Behandlungsraum (1) kann bestimmungsgemäß wieder genutzt werden.

In einer Schälmühle liegt Befall durch den Getreideplattkäfer sowie Befall durch Plodia interpunctella und Ephestia kuehniella vor. Alle Öffnungen, Türen, Fenster und große Mauerwerksrisse der Mühle werden gasdicht versiegelt. Im Dachgeschoß der Mühle sind Verarbeitungsmaschinen eingebracht, die Mahlrückstände beinhalten, die ebenfalls mit u.a. Eiern der Motten belegt sind. Auch diese Maschinen müssen der Schädlingsbekämpfung mit unterzogen werden.

Das Dachgeschoß der Mühle weist durch Sonneneinstrahlung bereits eine Tmeperatur von ca. 32 °C auf, während das EG der Mühle nur eine Temperatur von 16 °C messen läßt.

An verschiedenen Stellen in der Mühle werden Testinsekten in Käfigen eingebracht. Die Käfige enthalten auch Insektenbrut. Über ein Heizgerät gemäß Figur 1 wird heiße Luft über den Wärmetauscher mit separater Rauchgasführung in die Schälmühle eingeleitet. Es wird eine Zieltemperatur in der Mühle von ca. 25 °C angestrebt. Diese Temperatur ist nach bereits 4 Stunden erreicht. Alle Mauerwerksflächen, Gegenstände, Maschinen, Hölzer etc. in der Mühle weisen nunmehr 25 °C auf. Der Ausblasstutzen, von der Wärmetauscherkammer des Heizgerätes kommend, mündet in das EG der Mühle während der Ansaugstutzen vom Dachgeschoß zur Wärmetauscherkammer des Heizgerätes geführt ist. Nach dem Erreichen der Sollwert-Temperatur von 25 °C in der Mühle wird Sulfurylfluorid aus einem Vorratsbehälter in die Mühle eingeleitet. Die Einleitung wird beendet wenn die Sulfurylfluorid-Konzentration in der Raumluft 50 g/m³ beträgt. Der Luftinhalt der Schälmühle, der jetzt auch Sulfurylfluorid enthält, wird durch die Wärmetauscherkammer des Heizgerätes geführt und nach wie vor auf 25 °C möglichst konstant gehalten. Die Sulfurylfluorid-Konzentration wird durch Nachdosieren - notwendig wegen unvermeidbarer Gasverluste - auf ca. 50 g/m³ ebenfalls konstant gehalten. Nach ca. 36 Stunden Einwirkzeit von Sulfurylfluorid und Wärme wird dann das Heizgerät abgestellt und die Mühle gelüftet. Eine Auswertung der Testinsekten ergibt, daß alle Schädlinge in den Käfigen abgestorben sind.

### Beispiel 3:

In einer Mehlmühle liegt Befall durch den Mehlkäfer sowie durch Ephesthia elutella (Mottenart) vor. Die Mühle wird hinreichend gasdicht versiegelt und dann wird bei einer Starttemperatur von 18 °C heiße Luft über ein Heizgerät gemäß Figur 1 in die Mühle eingeleitet. Die Temperatur in der Mühle wird auf 30 °C erhöht und zwar mit einer Aufheizrate von 4 °C/Stunde. Dadurch sind Spannungen und Schäden an den Ausstattungen und Maschinen der Mühle vermieden. Beim Erreichen von 30 °C wird diese Temperatur noch ca. 1 Stunde konstant gehalten und dann Sulfurylfluorid aus einem Vorratsbehälter in die Mühle eingeleitet. Die Konzentration an Sulfurylfluorid wird auf 35 g/m³ konstant gehalten, wobei das Heizgerät bereits kurz vor Einleiten des Sulfurylfluorids abgestellt wird. Innerhalb von 48 Stunden sinkt die Temperatur in der Mühle wieder auf die Ausgangstemperatur ab und die Mühle wird dann gelüftet. Alle Schädlinge sind tot und auch einige Wochen nach der Behandlung ist noch kein Neubefall zu verzeichnen. Ausgebrachte Pheromonfallen bestätigen dies zusätzlich. Hitzeschäden in der Mühle waren nicht zu verzeichnen.

## Patentansprüche

1. Verfahren zur Warmluftentwesung in Mühlen, lebensmittelverarbeitenden Betrieben oder in sonstigen von Schädlingen befallenen Räumen durch Einleiten von heißer Luft in den Behandlungsraum mittels eines Brennstoff-beheizten Heizgerätes,
**dadurch gekennzeichnet,**
**dass** das Heizgerät eine separate Rauchgasführung aufweist, wodurch keine Abgase in den Behandlungsraum (1) gelangen, dass das Heizgerät eine Brennkammer (13) aufweist, die durch einen Wärmetauscher (17) von einer Wärmetauscherkammer (8) abgetrennt ist und die zu erwärmende Luft kontinuierlich oder diskontinuierlich durch die Wärmetauscherkammer (8) aus dem Behandlungsraum (1) herausgeführt, erwärmt und in den Behandlungsraum (1) zurückgeleitet wird, dass die Brennkammer (13) von der Wärmetauscherkammer (8) gasdicht abgetrennt ist, dass in den Behandlungsraum (1) vor, während oder nach der Erwärmung der Behandlungsraumluft als Begasungsmittel Sulfurylfluorid eingeleitet wird und dass die am Wärmetauscher (17) auftretende Temperatur niedriger als die Zersetzungstemperatur des Begasungsmittels ist.

2. Verfahren nach Anspruch 1,
**dadurch gekennzeichnet,**
**daß** bevorzugt in die Rückführleitung(11) Wasser über die Zufuhrleitung(16) eindosiert, zugesetzt, vernebelt oder versprüht wird und sich dadurch die relative Luftfeuchte im Behandlungsraum(1) auf einen gewünschten Wert einstellen läßt.

3. Verfahren nach Anspruch 1,
**dadurch gekennzeichnet,**
**daß** vom Behandlungsraum(1) eine Zufuhrleitung(7) zur Wärmetauscherkammer(8) eines Heizgerätes geführt wird, das eine Ventilatoreinheit(9) besitzt, und von der Wärmetauscherkammer(8) eine Rückführleitung(11) zum Behandlungsraum(1) weiterführt und im Heizgerät die Brennkammer (13) durch den Wärmetauscher(17) gasdicht von der Wärmetauscherkammer(8) abgetrennt ist.

4. Verfahren nach einem der vorhergehenden Ansprüche,
**dadurch gekennzeichnet,**
**daß** vor dem Erwärmen des Behandlungsraumes in den Behandlungsraum(1) ein bevorzugt mit Luft gefüllter Hohlkörper eingebracht ist und dieser bevorzugt während des Aufwärmens des Behandlungsraums(1) in die Umgebung entleert wird und dadurch einem Überdruck im Behandlungsraum(1) entgegengewirkt wird oder dieser vermieden wird.

5. Verfahren nach einem der vorhergehenden Ansprüche,
**dadurch gekennzeichnet,**
**daß** das Begasungsmittel bevorzugt nach dem Erwärmen des Behandlungsraums(1) oder nach Zusatz von Kohlendioxid in den Behandlungsraum(1) in den Behandlungsraum(1) eingeleitet wird.

6. Verfahren nach einem der vorhergehenden Ansprüche,
**dadurch gekennzeichnet,**
**daß** das Abgas des Heizgerätes von insbesondere unverbrannten organischen Gasen befreit wird und in den Behandlungsraum(1) zusätzlich eingeleitet wird.

7. Verfahren nach Anspruch 6,
**dadurch gekennzeichnet,**
**daß** das von unverbrannten organischen Gasen befreite, in den Behandlungsraum(1) eingeleitete Abgas sauerstoffarm und kohlendioxidreich ist und dadurch die Schädlinge schneller absterben.

8. Verfahren nach Anspruch 6 oder 7,
**dadurch gekennzeichnet,**
**daß** die Entfernung von unverbrannten organischen Gasen insbesondere durch thermische Nachverbrennung, Katalyse oder Filterung erfolgt.

9. Verfahren nach einem der vorhergehenden Ansprüche,
**dadurch gekennzeichnet,**
**daß** der Behandlungsraum(1) zur Durchführung des Verfahrens hinreichend gasdicht versiegelt wird.

## Claims

1. Method for hot-air disinfestation in mills, food-processing plant or in other spaces which are affected by pests by introducing hot air into the treatment space by means of a fuel-heated heating appliance,
**characterised in**
**that** the heating appliance comprises a separate flue gas flow control system, whereby no waste gases enter the treatment space (1), that the heating appliance comprises a combustion chamber (13), which is separated by a heat exchanger (17) from a heat-exchanger chamber (8), and the air which is to be heated is continuously or intermittently conveyed through the heat-exchanger chamber (8) out of the treatment space (1), heated and returned to the treatment space (1), that the combustion chamber (13) is separated in a gas-tight fashion from the heat-exchanger chamber (8), that sulphuryl fluoride is introduced as fumigant into the treatment space (1) before, during or after heating the treatment space air, and that the temperature occurring at the heat exchanger (17) is lower than the decomposition temperature of the fumigant.

2. Method according to Claim 1,
**characterised in**
**that** water is preferably metered, added, nebulised or sprayed into the return line (11) via the feed line (16) and the relative air humidity in the treatment space (1) can thereby be set to a desired value.

3. Method according to Claim 1,
**characterised in**
**that** a feed line (7) leads from the treatment space (1) to the heat-exchanger chamber (8) of a heating appliance, which has a fan unit (9), and a return line (11) continues from the heat-exchanger chamber (8) to the treatment space (1), and in the heating appliance the combustion chamber (13) is separated by the heat exchanger (17) in a gas-tight fashion from the heat-exchanger chamber (8).

4. Method according to any one of the preceding Claims,
**characterised in**
**that** a hollow body, preferably filled with air, is inserted in the treatment space (1) before the treatment space is heated, and this hollow body is preferably evacuated into the environment while the treatment space (1) is heated, thereby counteracting or preventing a pressure above atmospheric in the treatment space (1).

5. Method according to any one of the preceding Claims,
**characterised in**
**that** the fumigant is preferably introduced into the treatment space (1) after the treatment space (1) has been heated or carbon dioxide has been added into the treatment space (1).

6. Method according to any one of the preceding Claims,
**characterised in**
**that** the waste gas of the heating appliance is liberated in particular from unburned organic gases in particular and additionally introduced into the treatment space (1).

7. Method according to Claim 6,
**characterised in**
**that** the waste gas which is liberated from unburned organic gases and introduced into the treatment space (1) is low in oxygen and rich in carbon dioxide, so that the pests die more quickly.

8. Method according to Claim 6 or 7,
**characterised in**
**that** the removal of unburned organic gases is carried out in particular by thermal afterburning, catalysis or filtration

9. Method according to any one of the preceding Claims,
**characterised in**
**that** the treatment space (1) is sealed in a sufficiently gas-tight fashion to carry out the method.

## Revendications

1. Procédé de désinfestation par air chaud dans des moulins, des entreprises transformant des aliments ou dans d'autres locaux atteints par des parasites par introduction d'air chaud dans l'enceinte de traitement au moyen d'un appareil de chauffage chauffé par du combustible, **caractérisé en ce que** l'appareil de chauffage présente un conduit de gaz de fumée séparé et de ce fait, des gaz d'échappement n'arrivent pas dans l'enceinte de traitement (1), **en ce que** l'appareil de chauffage présente une chambre de combustion (13) qui est séparée par un échangeur de chaleur (17) d'une chambre d'échangeur de chaleur (8) et qui guide l'air chauffé continuellement ou discontinuellement à travers la chambre d'échangeur de chaleur (8) hors de l'enceinte de traitement (1), qui la chauffe et qui la ramène dans l'enceinte de traitement (1) **en ce que** la chambre de combustion (13) est séparée d'une manière étanche aux gaz de la chambre d'échangeur de chaleur (8), **en ce qu'**on introduit dans l'enceinte de traitement (1) avant, pendant ou après l'échauffement de l'air de l'enceinte de traitement comme moyen de gazage du fluorure sulfuryle et **en ce que** la température produite à l'échangeur de chaleur (17) est plus basse que la température de décomposition du moyen de gazage.

2. Procédé selon la revendication 1, **caractérisé en ce que** de préférence, dans le conduit de retour (11), l'eau est introduite d'une manière dosée, ajoutée, atomisée ou pulvérisée par le conduit d'amenée (16) et, de ce fait, l'humidité d'air relative dans l'enceinte de traitement (1) peut être réglée à une valeur recherchée.

3. Procédé selon la revendication 1, **caractérisé en ce que** de l'enceinte de traitement (1), un conduit d'amenée (7) est guidé vers la chambre d'échangeur de chaleur (8) d'un appareil de chauffage, qui possède une unité de ventilateur (9), et **en ce que** depuis la chambre d'échangeur de chaleur (8), un conduit de retour (11) mène à l'enceinte de traitement (1) et, dans l'appareil de chauffage, la chambre de combustion (13) est séparée par l'échangeur de chaleur (17) d'une manière étanche aux gaz de la chambre d'échangeur de chaleur (8).

4. Procédé selon l'une des revendications précédentes, **caractérisé en ce qu'**avant l'échauffement de l'enceinte de traitement, on introduit dans l'enceinte de traitement (1) un corps creux rempli de préférence d'air et que celui-ci est vidé de préférence pendant l'échauffement de l'enceinte de traitement (1) dans l'environnement et que de ce fait, on agit contre ou on évite une surpression dans l'enceinte de traitement (1).

5. Procédé selon l'une des revendications précédentes, **caractérisé en ce que** le moyen de gazage est introduit de préférence après l'échauffement de l'enceinte de traitement (1) ou après l'addition de dioxyde de carbone dans l'enceinte de traitement (1).

6. Procédé selon l'une des revendications précédentes, **caractérisé en ce que** le gaz d'échappement de l'appareil de chauffage est libéré notamment de gaz organiques non brûlés et est introduit additionnellement dans l'enceinte de traitement (1).

7. Procédé selon la revendication 6, **caractérisé en ce que** les gaz d'échappement libérés des gaz organiques non brûlés, introduits dans l'enceinte de traitement (1), sont pauvres en oxygène et riches en dioxyde de carbone et que de ce fait, les parasites meurent plus rapidement.

8. Procédé selon la revendication 6 ou 7, **caractérisé en ce que** l'élimination de gaz organiques non brûlés a lieu en particulier par une post-combustion thermique, une catalyse ou un filtrage.

9. Procédé selon l'une des revendications précédentes, **caractérisé en ce que** l'enceinte de traitement (1), pour exécuter le procédé, est scellée suffisamment d'une manière étanche aux gaz.
